# EUROPÄISCHE PATENTSCHRIFT

(11) **EP 1 182 359 B1**
(45) Veröffentlichungstag und Bekanntmachung des Hinweises auf die Patenterteilung: **15.01.2003**
(21) Anmeldenummer: 00118061.1
(22) Anmeldetag: 23.08.2000
(51) Int. Cl.: F15B 15/08, B23Q 1/26, B23Q 1/58

(54) **Kolbenstangenloser Linearantrieb sowie zugehöriges Gehäuse**
Rodless linear drive and its housing
Actionneur linéaire sans tige et son carter

(43) Veröffentlichungstag der Anmeldung: 27.02.2002
(73) Patentinhaber: FESTO AG & Co, 73734 Esslingen (DE)
(72) Erfinder: Weberruss, Rolf, 71394 Kernen (DE); Angué, Eric, 70469 Stuttgart (DE); Wagner, Thomas, 71686 Remseck (DE)
(74) Vertreter: Abel, Martin, Dipl.-Ing.

(56) Entgegenhaltungen:
- EP-B- 0 612 377
- WO-A-98/46889
- DE-C- 942 179
- GB-A- 470 088
- REINKE E: "KOLBENSTANGENLOSE PNEUMATIKANTRIEBE MIT PROFIL" OLHYDRAULIK UND PNEUMATIK,DE,KRAUSSKOPF VERLAG FÜR WIRTSCHAFT GMBH. MAINZ, Bd. 37, Nr. 5, 1. Mai 1993 (1993-05-01), Seiten 466-467, XP000364047 ISSN: 0341-2660

## Beschreibung

Die Erfindung betrifft einen kolbenstangenlosen Linearantrieb, mit einem länglichen Gehäuse, das einen Aufnahmeraum für ein axial bewegliches Antriebsteil aufweist, das über einen einen Längsschlitz des Gehäuses durchsetzenden Mitnehmer mit einem Führungsschlitten bewegungsgekoppelt ist, der an einer Linearführung, die zwei in einer Querrichtung seitwärts zu entgegengesetzten Längsseiten orientierte Führungsabschnitte aufweist, außen am Gehäuse in dessen Längsrichtung verstellbar geführt ist.

Die Erfindung betrifft ferner das Gehäuse eines Linearantriebes insbesondere der vorgenannten Art, mit einem sich in Längsrichtung erstreckenden Aufnahmeraum für ein axial bewegliches Antriebsteil, und mit einem den Durchgriff eines mit dem Antriebsteil bewegungsgekoppelten Mitnehmers ermöglichenden Längsschlitz, wobei die Umhüllungslinie der Querschnittskontur des Gehäuses zumindest in dem den Längsschlitz enthaltenden Längenabschnitt des Gehäuses von vier zumindest im Wesentlichen ein Rechteck bildenden Begrenzungslinien definiert ist.

Ein derartiger kolbenstangenloser Linearantrieb mit entsprechend ausgebildetem Gehäuse geht aus der EP 0 612 377 B1 hervor. Dieser bekannte Linearantrieb hat ein im Querschnitt rechteckförmig konturiertes Gehäuse mit einem ein kolbenartiges Antriebsteil enthaltenden Aufnahmeraum, wobei an einer Stelle der Wandung des Gehäuses ein radial durchgehender Längsschlitz vorgesehen ist, der innen zum Aufnahmeraum und außen zu einem Außenflächenabschnitt des Gehäuses ausmündet.

An einem rechtwinklig dazu verlaufenden benachbarten Außenflächenabschnitt des Gehäuses ist eine von einer Führungsschiene gebildete Linearführung vorgesehen, an der ein Führungsschlitten linear verschiebbar geführt ist, der mit dem Mitnehmer in Antriebsverbindung steht. Die lineare Bewegung des Antriebsteils hat eine synchrone, geführte Linearbewegung des Führungsschlittens zur Folge, wobei letzterer an einer Tragfläche mit Befestigungsmitteln zum Anbringen einer zu bewegenden Last ausgestattet ist.

Der bekannte Linearantrieb zeichnet sich zwar durch eine sehr gute Qualität der Längsführung aus. Auch verfügt er über relativ kompakte Abmessungen. Weite Teile der Außenfläche des Gehäuses sind allerdings durch die Linearführung sowie die zwischen dem Antriebsteil und dem Führungsschlitten vorhandenen Kraftkopplungsmaßnahmen belegt, so dass effektiv nur zwei Außenflächenabschnitte des Gehäuses des Linearantriebes für Befestigungszwecke zur Verfügung stehen.

Es ist daher die Aufgabe der vorliegenden Erfindung, einen kolbenstangenlosen Linearantrieb sowie ein insbesondere für diesen geeignetes Gehäuse zu schaffen, bei dem trotz kompakter Abmessungen große Teile der Außenfläche des Gehäuses zugänglich gehalten werden können.

Gelöst wird diese Aufgabe bei einem kolbenstangenlosen Linearantrieb der eingangs genannten Art dadurch, dass der Längsschlitz derart angeordnet ist, dass seine Schlitzebene schräg zu der von der Querrichtung und der Längsrichtung aufgespannten Führungsebene der Linearführung verläuft, wobei seine äußere Schlitzöffnung der Führungsebene zugewandt ist.

In Verbindung mit einem Gehäuse der eingangs genannten Art ergibt sich eine Lösung der Aufgabe bereits dadurch, dass die Schlitzebene des Längsschlitzes, im Querschnitt des Gehäuses gesehen, derart schräg verläuft, dass sie die Umhüllungslinie unter einem von 90° abweichenden Winkel schneidet.

Während bei einer Bauform gemäß EP 0 612 377 B1 die Schlitzebene des Längsschlitzes parallel zu der von der Linearführung definierten Führungsebene verläuft, was zu einer großflächigen Belegung des Außenumfanges des Gehäuses führt, eröffnet die Schräganordnung des Längsschlitzes eine enge Zuordnung zwischen dem Mitnehmer und der Linearführung, ohne Nachteile bei der Führungsqualität eingehen zu müssen und bei gleichzeitiger Freisetzung großer Teile des Gehäuseumfanges für Befestigungsmaßnahmen oder sonstige Zwecke. Dabei ist es möglich, Linearführung und Längsschlitz sehr eng benachbart zueinander anzuordnen.

Ungeachtet einer eventuell vorhandenen Linearführung kann bei einem üblicherweise als rechteckförmig konturiert bezeichneten Gehäuse die Schlitzebene so ausgerichtet werden, dass sie weder parallel noch rechtwinkelig zur Umhüllungslinie der Querschnittskontur des Gehäuses verläuft und auf Grund dieses Schrägverlaufes eine günstige Platzierung der äußeren Schlitzöffnung des Längsschlitzes erfolgt, die den größten Teil der Rechteckkontur des Gehäuses für beliebige Nutzungen zugänglich hält.

Vorteilhafte Weiterbildungen der Erfindung gehen aus den Unteransprüchen hervor.

Es ist zweckmäßig, den Längsschlitz derart anzuordnen, dass seine Schlitzebene mit der von der Linearführung definierten Führungsebene einen spitzen Winkel einschließt.

Bei einer besonders kompakten Bauform ist eine zumindest teilweise Überlappung der Linearführung und des Aufnahmeraumes in der Querrichtung der Führungsebene vorgesehen. Der Mitnehmer kann in diesem Falle schräg an der Linearführung vorbeigreifen.

Bei einer weiteren vorteilhaften Bauform zeichnet sich die Außenkontur des Gehäuses des Linearantriebes durch eine Außenfläche aus, die vier sich paarweise gegenüberliegende Außenflächenabschnitte besitzt, von denen einer die Linearführung aufweist und deren andere als Befestigungsflächen ausgebildet sind. Die Befestigungsflächen können über Befestigungsmittel verfügen, die zur Fixierung des Gehäuses oder zur Befestigung von Zusatzteilen am Gehäuse herangezogen werden können. Der Längsschlitz ist in diesem Falle vorzugsweise derart gestaltet, dass er entweder direkt zu dem mit der Linearführung ausgestatteten Außenflächenabschnitt des Gehäuses ausmündet oder zu einem Übergangsbereich zwischen diesem vorerwähnten Außenflächenabschnitt und einer der beiden sich längsseits an diesen Außenflächenabschnitt anschließenden Befestigungsflächen.

Bei einem eine rechteckförmige Außenkontur aufweisenden Gehäuse kann der Mitnehmer innerhalb der Umhüllungslinie der Querschnittskontur zu dem die Linearführung aufweisenden Außenflächenabschnitt des Gehäuses verlaufen, so dass sich keine überstehenden Bauteile einstellen.

Die Linearführung ist vorzugsweise über ihre gesamte Länge hinweg unmittelbar mit dem Gehäuse des Linearantriebes verbunden, wobei sie insbesondere als Führungsschiene ausgebildet ist, die vorzugsweise schraubenlos am Gehäuse fixiert ist. Das Fixieren kann durch einen Einwalzvorgang erfolgen oder vorzugsweise durch eine einstückige Ausgestaltung von Führungsschiene und Gehäuse, beispielsweise im Rahmen einer Strangpressfertigung.

Der Linearantrieb kann als elektrisch betätigbare Bauart ausgeführt sein und beispielsweise über einen Spindeltrieb verfügen, der ein als Spindelmutter ausgeführtes Antriebsteil linear zu verlagern im Stande ist. Besonders vorteilhaft ist jedoch eine Ausführungsform, bei der das Antriebsteil als Kolben ausgebildet ist und die Betätigungskraft durch Fluidbeaufschlagung erfährt. In einem solchen Falle ist dem Längsschlitz eine Dichtungseinrichtung zugeordnet, die unkontrollierten Fluidaustritt verhindert.

Nachfolgend wird die Erfindung anhand der beiliegenden Zeichnung näher erläutert. In dieser zeigen:
- Figur 1: eine erste Bauform des erfindungsgemäßen Linearantriebes, der mit einem erfindungsgemäßen Gehäuse ausgestattet ist, wobei der besseren Übersichtlichkeit wegen ein üblicherweise vorhandener Abschlussdeckel sowie eine dem Längsschlitz zugeordnete Dichtungseinrichtung nicht abgebildet ist, und
- Figur 2: eine Stirnansicht des Linearantriebes aus Figur 1 mit Blickrichtung gemäß Pfeil II.

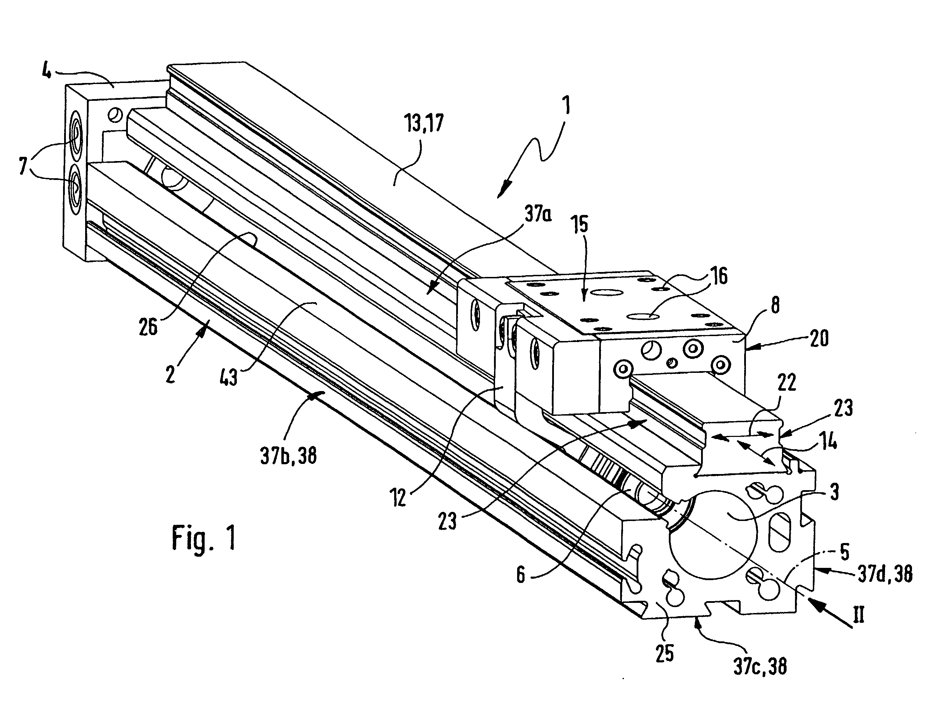

Der in der Zeichnung abgebildete kolbenstangenlose Linearantrieb 1 wird durch Fluidkraft und insbesondere pneumatisch betätigt. Er verfügt über ein längliches Gehäuse 2, das rohrförmig ausgebildet ist und im Innern einen vorzugsweise zylindrisch konturierten Aufnahmenraum 3 begrenzt, der stirnseitig durch an das Gehäuse 2 angesetzte Abschlussdeckel 4 verschlossen ist. Die Figur 1 zeigt das Gehäuse 2 in einem Zustand, bei dem der vordere Abschlussdeckel entfernt ist, so dass sich die bevorzugte Kreiskontur des Aufnahmeraumes 3 ersehen lässt.

Im Innern des Aufnahmeraumes 3 befindet sich ein zu einer Bewegung in Richtung der Gehäuselängsachse 5 antreibbares Antriebsteil 6, das als Kolben ausgebildet ist und den Aufnahmeraum 3 in zwei axial aufeinanderfolgende Arbeitskammern fluiddicht unterteilt.

Über Anschlussöffnungen 7, die beim Ausführungsbeispiel gemeinsam am rückwärtigen Abschlussdeckel 4 vorgesehen sind, kann eine Zufuhr und Abfuhr von Druckmedium bezüglich der Arbeitsräume erfolgen. Das Gehäuse 2 kann hierzu über interne Fluidkanäle verfügen. Durch gesteuerte Fluidbeaufschlagung kann somit das Antriebsteil 6 zu einer mit der Gehäuselängsachse 5 gleichgerichteten Antriebsbewegung veranlasst werden.

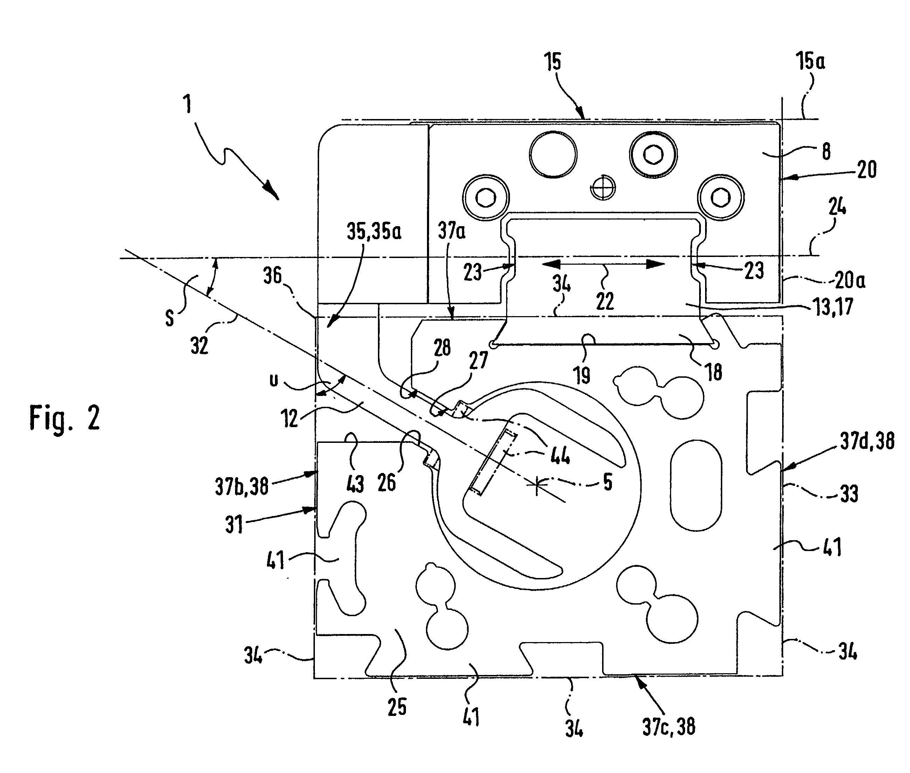

Die Antriebsbewegung des Antriebsteils 6 lässt sich außerhalb des Gehäuses 5 an einem Führungsschlitten 8 abgreifen, der mittels eines Mitnehmers 12 mit dem Antriebsteil 6 axial bewegungsgekoppelt ist. Das Antriebsteil 6 ist in Figur 2 nicht dargestellt.

Der Führungsschlitten 8 ist an einer außen am Gehäuse 2 angeordneten Linearführung 13 in Gehäuselängsrichtung verstellbar geführt. Die durch Doppelpfeil angedeutete Längsrichtung 14 der Linearführung 13 verläuft parallel zur Gehäuselängsachse 5.

Die Figuren 1 und 2 zeigen den Linearantrieb 1 mit einer Ausrichtung, bei der die Linearführung 13 oben liegt. Der Führungsschlitten 8, der die Linearführung 13 vorzugsweise reiterartig übergreift, ist an der vom Gehäuse 2 und von der Längsführung 13 abgewandten Oberseite mit einer Tragfläche 15 ausgestattet, an der Befestigungsmittel 16 vorgesehen sind, um eine zu transportierende Last an der Tragfläche 15 befestigen zu können.

Die Linearführung 13 ist über ihre gesamte Länge hinweg mit dem Gehäuse 2 verbunden. Bevorzugt ist sie von einer Führungsschiene 17 gebildet, die insbesondere schraubenlos an der Außenfläche des Gehäuses 2 befestigt ist. Das Ausführungsbeispiel zeigt exemplarisch eine schraubenlose Befestigung durch ein Einwalzverfahren, wobei die Führungsschiene mit einem Fußabschnitt 18 über ihre gesamte Länge hinweg in einer Gehäusenut 19 einsitzt, deren eine Flanke durch einen Walzvorgang verformt wurde, um den Fußabschnitt 18 fest einzuspannen.

Bei einer nicht näher dargestellten, alternativen Bauform ist die Führungsschiene 17 als einstückiger Bestandteil des Gehäuses 2 ausgebildet, so dass sie zusammen mit diesem sehr rationell durch Strangpressen hergestellt werden kann.

Die Linearführung 13 hat zwei in einer durch einen Doppelpfeil angedeuteten Querrichtung 22 seitwärts zu entgegengesetzten Längsseiten des Gehäuses 2 orientierte Führungsabschnitte 23, die vorzugsweise von Führungsbahnen gebildet sind und sich über die gesamte Länge der Linearführung 13 erstrecken. An ihnen stützt sich der Führungsschlitten 8 unmittelbar oder mittelbar ab, letzteres beispielsweise unter Zwischenschaltung nicht näher dargestellter Wälz- oder Gleitkörper. Auf diese Weise wird erricht, dass der Führungsschlitten 8 in der Querrichtung 22 bezüglich der Linearführung 13 abgestützt ist, wobei die Führungsabschnitte 23 auch zur Aufnahme von Kräften in der Lage sind, die durch eine an der Tragfläche 15 befestigte Last rechtwinkelig zur Querrichtung 22 auf die Linearführung 13 einwirken.

Durch die Kooperation zwischen dem Führungsschlitten 8 und der Linearführung 13 wird erreicht, dass andere als in der Längsrichtung 14 wirksame Reaktionskräfte einer zu bewegenden Last nicht auf das Antriebsteil 6 einwirken, sondern ausschließlich von der Linearführung 13 bzw. dem diese tragenden Gehäuse 2 aufgenommen werden.

Insgesamt kann man die im Betrieb des Linearantriebes 1 vom Führungsschlitten 8 ausgeführte Linearbewegung dahingehend charakterisieren, dass sie in einer Führungsebene 24 verläuft, die durch die Längsrichtung 14 und die zu dieser rechtwinkelige Querrichtung 22 der Linearführung 13 aufgespannt wird. Die Ausdehnungsebene 15a der oben erwähnten Tragfläche 15 verläuft vorzugsweise parallel zu der Führungsebene 24. Der Mitnehmer 12 kann fingerartig schmal ausgebildet sein und durchgreift einen an einer Stelle des Umfanges des Aufnahmeraumes 3 in der Gehäusewandung 25 ausgebildeten Längsschlitz 26. Die Länge des Längsschlitzes 26 entspricht der Länge des Gehäuses 2. Der Längsschlitz 26 mündet mit einer inneren Schlitzöffnung 27 in den Aufnahmeraum 3 und mit seiner entgegengesetzten äußeren Schlitzöffnung 28 zur längsseitigen Außenfläche 31 des Gehäuses 2. Die durch die Längsrichtung und die Tiefenrichtung des Längsschlitzes 26 aufgespannte Schlitzebene ist in Figur 2 strichpunktiert bei 32 markiert.

Wie des Weiteren aus Figur 2 gut ersichtlich ist, verläuft die Schlitzebene 32 schräg zu der von der Linearführung 13 definierten Führungsebene und schließt mit dieser auf der der Linearführung 13 zugewandten Seite insbesondere einen spitzen Winkel "s" ein. Dabei ist die äußere Schlitzöffnung 28 der Führungsebene 24 zugewandt. Man kann auch sagen, dass sich der Längsschlitz 26 ausgehend vom Aufnahmeraum 3 zur Seite der Linearführung 13 erstreckt. Durch diese Maßnahme ergibt sich insbesondere eine sehr gute Nutzbarkeit der Außenfläche 31 des Gehäuses 2, beispielsweise für Befestigungszwecke.

Besonders deutlich macht diesen Vorteil die beim Ausführungsbeispiel gewählte bevorzugte Ausgestaltung des Gehäuses 2, das man als Gehäuse mit rechteckförmiger Querschnittskontur charakterisieren kann, weil eine um die Querschnittskontur herumgelegte gedachte Umhüllungslinie 33 eine rechteckförmige Gestalt hat. Sie setzt sich zusammen aus vier geradlinigen Begrenzungslinien 34, die die vier Seiten eines Rechteckes bilden.

Das Gehäuse 2 verfügt zumindest in dem den Längsschlitz 26 enthaltenden Längenabschnitt über die zuvor erläuterte Gestaltung. Beim Ausführungsbeispiel gilt dies für die gesamte Gehäuselänge, weil der Längsschlitz 26 axial durchgehend ausgebildet ist.

Innerhalb des von der Umhüllungslinie definierten Rechteckquerschnittes ist der Längsschlitz 26 derart schräg orientiert, dass seine Schlitzebene 32 die Umhüllungslinie 33 unter einem Winkel "u" schneidet, der ungleich 90° ist.

Der besondere Vorteil der Schrägausrichtung des Längsschlitzes 26 wird aus Figur 2 deutlich. Demnach besteht beispielsweise die Möglichkeit, die Schrägneigung der Schlitzebene 32 so zu wählen, dass sie die Umhüllungslinie 33 in einem Eckenbereich 35 schneidet, entweder indem sie den Eckpunkt 36 exakt durchsetzt oder mit geringem Abstand an diesem Eckpunkt 36 vorbeiläuft. Es ist dann lediglich dieser Eckenbereich 35 vom Längsschlitz 26 in Beschlag genommen, während der verbleibende Großteil der rechteckförmigen Außenkontur für Maßnahmen zugänglich bleibt, die beim Einsatz des Linearantriebes 1 nützlich sind.

Dies muss nicht notwendigerweise zur Installation einer Linearführung am Gehäuse 2 ausgenutzt werden, doch bietet sich eine derartige Verwendungsweise besonders an. Man hat dann nämlich die aus der Zeichnung hervorgehende Möglichkeit, zusätzlich zu dem mit einer Linearführung 13 ausgestatteten ersten Außenflächenabschnitt 37a insgesamt drei weitere, den anderen Begrenzungslinien 34 zugeordnete Außenflächenabschnitte 37b, 37c, 37d zur Verfügung zu stellen, die beispielsweise als Befestigungsflächen 38 ausgebildet sein können. Bei einem rechteckförmig konturierten Gehäuse 2 stehen somit insgesamt drei Rechteckseiten für Befestigungsmaßnahmen zur Verfügung, wobei lediglich diejenige Befestigungsfläche 38, die dem Eckenbereich 35 zugeordnet ist, geringfügig schmäler ist, was jedoch die Gebrauchsfähigkeit kaum beeinträchtigt. Verglichen mit konventionellen Linearantrieben, bei denen am Gehäuse nur zwei Befestigungsflächen zur Verfügung gestellt werden können, ergeben sich durch die besondere Ausgestaltung des Längsschlitzes entschieden mehr Befestigungsmöglichkeiten.

Die Befestigungsflächen 38 sind beim Ausführungsbeispiel mit z.B. von Vorsprüngen oder von nutartigen Vertiefungen gebildeten Befestigungsmitteln 41 ausgestattet, die dazu verwendet werden können, das Gehäuse 2 an einer Tragstruktur beliebiger Art zu befestigen oder um Zusatzkomponenten anzubringen, beispielsweise Sensoren oder Ventile.

Zusätzlich zu der Tragfläche 15 kann mindestens eine weitere Tragfläche 20 vorgesehen sein, deren Ausdehnungsebene 20a rechtwinkelig zu der Führungsebene 24 verläuft und die mit nicht näher dargestellten Befestigungsmitteln ausgestattet ist, die ebenfalls der Fixierung zu bewegender Lasten dient. Bevorzugt befindet sich die weitere Tragfläche 20 an der der Angriffsstelle des Mitnehmers 12 entgegengesetzten Längsseite des Führungsschlittens 8. Es versteht sich, dass bei Bedarf auch nur eine der beiden Tragflächen 15, 20 vorhanden sein kann, die übrigens auch als Befestigungsflächen bezeichnet werden können.

Durch die besondere Längsschlitzgestaltung ist es möglich, zum einen eine in der Querrichtung 22 relativ breit bauende und daher hoch belastbare Linearführung 13 zu realisieren und zum anderen kompakte Querabmessungen in der Querrichtung 22 einzuhalten.

In diesem Zusammenhang ist die Linearführung 13 zweckmäßigerweise so platziert, dass sie den Aufnahmeraum 3 in der Querrichtung 22 der Führungsebene 24 ein Stück weit überlappt. Aus Sicht der Tragfläche 15 wird somit ein Teil der Breite des Aufnahmeraumes 3 von der Linearführung 13 überdeckt. Gleichwohl ergibt sich keine Kollision zwischen der Linearführung 13 und dem Mitnehmer 12, weil letzterer auf seinem Weg ausgehend vom Aufnahmeraum 3 hin zum Führungsschlitten 15 schräg an der Linearführung 16 vorbeigreift.

Der Ort der Ausmündung des Längsschlitzes 26 im Bereich der Außenfläche 31 des Gehäuses 2 hängt vom Neigungswinkel "s" zwischen der Schlitzebene 32 und der Führungsebene 24 ab. Beim Ausführungsbeispiel ist die äußere Schlitzöffnung 28 grob dem Übergangsbereich 35a zwischen dem mit der Linearführung 13 ausgestatteten Außenflächenabschnitt 37a und dem sich daran schließenden weiteren Außenflächenabschnitt 37b zugeordnet. Würde man eine Anordnung treffen, bei der die die Gehäuselängsachse 5 enthaltende Schlitzebene 32 steiler gestellt ist, also ausgehend von der Anordnung gemäß Figur 2 näher zur Linearführung 13 verschwenkt wäre, ließe sich ohne Weiteres auch eine Anordnung realisieren, bei der die Schlitzebene 32 den gleichen Außenflächenabschnitt 37a durchsetzt, der auch die Linearführung 13 aufweist (nicht dargestellt).

Zweckmäßigerweise wird man die Schräglage des Längsschlitzes 26 so wählen, dass die äußere Schlitzöffnung 28 wie abgebildet in dem Übergangsbereich 35a bzw. in einem der Eckenbereiche 35 der Umhüllungslinie 33 zu liegen kommt, wie dies beim Ausführungsbeispiel der Fall ist. Damit kann nicht nur die sich an der einen Seite des Eckenbereiches 35 anschließende Befestigungsfläche 37b, 38 relativ breit ausgeführt werden, sondern es kann auch der erste Außenflächenabschnitt 37a eine relativ große Baubreite besitzen, die sich zur Unterbringung einer breiten Linearführung 13 verwenden lässt. Um gleichwohl zu verhindern, dass das Gehäuse 2 in der Querrichtung 22 vom Mitnehmer 12 oder vom Führungsschlitten 8 überragt wird, wählt man für den Mitnehmer 12 zweckmäßigerweise eine derart abgewinkelte oder abgebogene Formgebung, dass er noch innerhalb der Umhüllungslinie 33 zu dem die Linearführung 13 aufweisenden Außenflächenabschnitt 37a des Gehäuses 2 abgeht. Somit greift der Mitnehmer 12 an der dem Eckenbereich 35 zugewandten Längsseite des Führungsschlittens 8 an, wobei jedoch die gesamte bewegliche Anordnung, bei einer Draufsicht auf die Tragfläche 15 gesehen, innerhalb des Umrisses des zugeordneten Außenflächenabschnittes 37a verbleibt.

Besonders platzsparend lässt sich der Kopplungsbereich zwischen dem Mitnehmer 12 und dem Führungsschlitten 8 realisieren, wenn in dem Übergangsbereich 35a zwischen dem die Linearführung 13 aufweisenden Außenflächenabschnitt 37a und dem sich im Bereich der äußeren Schlitzmündung 28 daran schließenden weiteren Außenflächenabschnitt 37b eine sich über die Länge des Gehäuses 2 erstreckende Aussparung 43 vorgesehen ist, innerhalb der sich der abgewinkelte Längenabschnitt des Mitnehmers 12 befindet.

Nachzutragen ist noch, dass dem Längsschlitz 26 insbesondere bei einem fluidbetätigten Linearantrieb 1 eine lediglich in Figur 2 strichpunktiert angedeutete Dichtungseinrichtung 44 zugeordnet ist, die insbesondere ein biegeflexibles Dichtband aufweist, das vom Aufnahmeraum 3 her die innere Schlitzöffnung 27 durch Kontakt mit den den Längsschlitz begrenzenden Gehäuseabschnitten fluiddicht abdichten kann. Die Abdichtung findet axial beidseits des als Kolben ausgebildeten Antriebsteils 6 statt, wobei das Dichtband im Bereich des Mitnehmers 12 in einem drucklosen Bereich des Antriebsteils 6 vom Längsschlitz abgehoben wird, um den Durchgriff des Mitnehmers 12 zu gestatten.

## Patentansprüche

1. Kolbenstangenloser Linearantrieb, mit einem länglichen Gehäuse (2), das einen Aufnahmeraum (3) für ein axial bewegliches Antriebsteil (6) aufweist, das über einen einen Längsschlitz (26) des Gehäuses (2) durchsetzenden Mitnehmer (12) mit einem Führungsschlitten (8) bewegungsgekoppelt ist, der an einer Linearführung (13), die zwei in einer Querrichtung (22) seitwärts zu entgegengesetzten Längsseiten des Gehäuses weisende Führungsabschnitte (23) aufweist, außen am Gehäuse (2) in dessen Längsrichtung verstellbar geführt ist, **dadurch gekennzeichnet, dass** der Längsschlitz (26) derart angeordnet ist, dass seine Schlitzebene (32) schräg zu der von der Querrichtung (22) und der Längsrichtung (14) aufgespannten Führungsebene (24) der Linearführung (13) verläuft, wobei seine äußere Schlitzöffnung (28) der Führungsebene (24) zugewandt ist.

2. Linearantrieb nach Anspruch 1, **dadurch gekennzeichnet, dass** die Schlitzebene (32) mit der Führungsebene (24) einen spitzen Winkel einschließt.

3. Linearantrieb nach Anspruch 1 oder 2, **dadurch gekennzeichnet, dass** sich die Linearführung (13) und der Aufnahmeraum (3) in der Querrichtung (22) der Führungsebene (24) zumindest ein Stück weit überlappen, wobei der Mitnehmer (12) zum Führungsschlitten (8) hin zumindest ein Stück weit schräg an der Linearführung (13) vorbeigreift.

4. Linearantrieb nach einem der Ansprüche 1 bis 3, **gekennzeichnet durch** eine die Außenkontur des Gehäuses (2) definierende Außenfläche (31) mit vier sich paarweise gegenüberliegenden Außenflächenabschnitten (37a - 37d), von denen einer mit der Linearführung (13) ausgestattet ist, während die anderen als Befestigungsflächen (38) ausgebildet sind, wobei der Längsschlitz (26) außen zu dem mit der Linearführung (13) ausgestatteten Außenflächenabschnitt (37a) oder zu einem Übergangsbereich (35a) zwischen diesem und einer der sich anschließenden Befestigungsflächen (38) ausmündet.

5. Linearantrieb nach Anspruch 4, **dadurch gekennzeichnet, dass** die Umhüllungslinie (33) der Querschnittskontur des Gehäuses (2) zumindest in dem den Längsschlitz (26) enthaltenden Längenabschnitt des Gehäuses (2) von vier zumindest im Wesentlichen ein Rechteck beschreibenden Begrenzungslinien (34) gebildet ist, denen jeweils einer der Außenflächenabschnitte (37a - 37d) zugeordnet ist.

6. Linearantrieb nach Anspruch 5, **dadurch gekennzeichnet, dass** der Mitnehmer (12) innerhalb der Umhüllungslinie (33) zu dem die Linearführung (13) aufweisenden Außenflächenabschnitt (37a) des Gehäuses (2) verläuft.

7. Linearantrieb nach einem der Ansprüche 1 bis 6, **dadurch gekennzeichnet, dass** der Längsschlitz (26) außen zu einem Übergangsbereich (35a) zwischen einem die Linearführung (13) aufweisenden Außenflächenabschnitt (37a) und einem sich winkelig daran anschließenden weiteren Außenflächenabschnitt (37b) ausmündet, wobei in dem Übergangsbereich (35a) zweckmäßigerweise eine sich in Längsrichtung des Gehäuses (2) erstreckende Aussparung (43) vorgesehen ist, in der der Mitnehmer (12) zu dem die Linearführung (13) aufweisenden Außenflächenabschnitt (37) hin abgewinkelt ist.

8. Linearantrieb nach einem der Ansprüche 1 bis 7, **dadurch gekennzeichnet, dass** die Linearführung (13) von einer Führungsschiene (17) gebildet ist.

9. Linearantrieb nach Anspruch 8, **dadurch gekennzeichnet, dass** die Führungsschiene (17) schraubenlos am Gehäuse (2) fixiert ist, beispielsweise durch Einwalzen oder durch Ausgestaltung als einstückiger Gehäusebestandteil.

10. Linearantrieb nach einem der Ansprüche 1 bis 9, **dadurch gekennzeichnet, dass** der Führungsschlitten (8) die Linearführung (13) auf der vom Gehäuse (2) abgewandten Seite reiterähnlich übergreift.

11. Linearantrieb nach einem der Ansprüche 1 bis 10, **gekennzeichnet durch** eine **durch** Fluidkraft betätigbare Bauform, bei der das Antriebsteil (6) ein fluidisch beaufschlagbarer Kolben ist und bei der dem Längsschlitz (26) eine Dichtungseinrichtung (44) zugeordnet ist.

12. Linearantrieb nach einem der Ansprüche 1 bis 11, **dadurch gekennzeichnet, dass** die Führungsebene (24) parallel oder rechtwinkelig zur Ausdehnungsebene (15a, 20a) einer zur Befestigung mindestens einer zu bewegenden Last dienenden Tragfläche (15, 20) des Führungsschlittens (8) verläuft.

13. Linearantrieb nach einem der Ansprüche 1 bis 12, **dadurch gekennzeichnet, dass** die Schlitzebene (32) den gleichen Außenflächenabschnitt (37a) durchsetzt, der auch die Linearführung (13) aufweist.

14. Linearantrieb nach einem der Ansprüche 1 bis 13, **dadurch gekennzeichnet, dass** die Schlitzebene (32) die Außenfläche (31) des Gehäuses (2) im Übergangsbereich (35a) zwischen dem die Linearführung (13) aufweisenden Außenflächenabschnitt (37a) und einem sich winkelig daran anschließenden weiteren Außenflächenabschnitt (37b) durchsetzt.

15. Gehäuse eines Linearantriebes, insbesondere eines Linearantriebes nach einem der Ansprüche 1 bis 14, mit einem sich in Längsrichtung erstreckenden Aufnahmeraum (3) für ein axial bewegbares Antriebsteil (6), und mit einem den Durchgriff eines mit dem Antriebsteil (6) bewegungsgekoppelten Mitnehmers (12) ermöglichenden Längsschlitz (26), wobei die Umhüllungslinie (33) der Querschnittskontur des Gehäuses (2) zumindest in dem den Längsschlitz (26) enthaltenden Längenabschnitt des Gehäuses (2) von vier zumindest im Wesentlichen ein Rechteck bildenden Begrenzungslinien (34) definiert ist, **dadurch gekennzeichnet, dass** die Schlitzebene (32) des Längsschlitzes (26), im Querschnitt des Gehäuses (2) gesehen, derart schräg verläuft, dass sie die Umhüllungslinie (33) unter einem von 90° abweichenden Winkel schneidet.

16. Gehäuse nach Anspruch 15, **dadurch gekennzeichnet, dass** die Schlitzebene (32) die Umhüllungslinie in einem Eckenbereich (35) schneidet, vorzugsweise mit geringem Abstand zum zugeordneten Eckpunkt (36).

17. Gehäuse nach Anspruch 15 oder 16, **dadurch gekennzeichnet, dass** das Gehäuse (2) in einem der Eckenbereiche (35) der Umhüllungslinie (33) eine längs verlaufende Aussparung (43) aufweist, zu der der Längsschlitz (26) außen ausmündet.

## Claims

1. Rodless linear drive with an oblong housing (2) incorporating a locating chamber (3) for an axially movable drive part (6) coupled for movement by a driver (12) passing through a longitudinal slot (26) of the housing (2) to a guide block (8) adjustably guided on the outside of the housing (2) in its longitudinal direction on a linear guide (13) comprising two guide sections (23) oriented in a transverse direction (22) sideways towards opposite longitudinal sides of the housing, **characterised in that** the longitudinal slot (26) is so arranged that its slot plane (32) extends at an angle to the guide plane (24) of the linear guide (13) defined by the transverse direction (22) and the longitudinal direction (14), its outer slot opening (28) facing the guide plane (24).

2. Linear drive according to claim 1, **characterised in that** the slot plane (32) encloses an acute angle with the guide plane (24).

3. Linear drive according to claim 1 or 2, **characterised in that** the linear guide (13) and the locating chamber (3) overlap each other at least to some extent in the transverse direction (22) of the guide plane (24), the driver (12) passing the linear guide (13) at least to some extent at an angle towards the guide block (8).

4. Linear drive according to any of claims 1 to 3, **characterised in that** the external contour of the housing (2) has an outer surface (31) comprising four outer surface sections (37a - 37d) lying opposite each other in pairs, one carrying the linear guide (13) while the others are designed as mounting faces (38), the longitudinal slot (26) terminating on the outside either at the outer surface section (37a) carrying the linear guide (13) or in a transitional area (35a) between this and one of the adjacent mounting faces (38).

5. Linear drive according to claim 4, **characterised in that** the envelope (33) of the cross-sectional contour of the housing (2) is, at least in the section of the housing (2) containing the longitudinal slot (26), defined by four boundary lines (34) essentially forming a rectangle, each being assigned to one of the outer surface sections (37a-37d).

6. Linear drive according to claim 5, **characterised in that** the driver (12) extends within the envelope (33) towards the outer surface section (37a) of the housing (2) carrying the linear drive (13).

7. Linear drive according to any of claims 1 to 6, **characterised in that** the longitudinal slot (26) terminates on the outside in a transitional area (35a) between an outer surface section (37a) carrying the linear guide (13) and a further outer surface area (37b) adjacent thereto at an angle, the transitional area (35a) expediently incorporating a recess (43) extending in the longitudinal direction of the housing (2), in which the driver (12) is angled towards the outer surface section (37a) carrying the linear drive (13).

8. Linear drive according to any of claims 1 to 7, **characterised in that** the linear guide (13) is designed as a guide rail (17).

9. Linear drive according to claim 8, **characterised in that** the guide rail (17) is mounted on the housing (2) without involving the use of screws, for instance by rolling-in or by forming an integral part of the housing.

10. Linear drive according to any of claims 1 to 9, **characterised in that** the guide block (8) rides on the linear guide (13) on the side remote from the housing (2).

11. Linear drive according to any of claims 1 to 10, **characterised by** a fluid-operated design, wherein the drive part (6) is a piston operated by a fluid and the longitudinal slot (26) is provided with a sealing device (44).

12. Linear drive according to any of claims 1 to 11, **characterised in that** the guide plane (24) extends parallel or at right angles to the plane of extension (15a, 20a) to a supporting surface (15, 20) of the guide block (8) for mounting at least one load to be moved.

13. Linear drive according to any of claims 1 to 12, **characterised in that** the slot plane (32) passes through the outer surface section (37a) carrying the linear guide (13).

14. Linear drive according to any of claims 1 to 13, **characterised in that** the slot plane (32) passes through the external surface (31) of the housing (2) in the transitional area (35a) between an outer surface section (37a) carrying the linear guide (13) and a further outer surface area (37b) adjacent thereto at an angle.

15. Housing of a linear drive, in particular of a linear drive according to any of claims 1 to 14, with a longitudinal locating chamber (3) for an axially movable drive part (6) and with a longitudinal slot (26) for the passage of a driver (12) coupled for movement to the drive part (6), the envelope (33) of the cross-sectional contour of the housing (2) being, at least in the section of the housing (2) containing the longitudinal slot (26), defined by four boundary lines (34) essentially forming a rectangle, **characterised in that** the slot plane (32) of the longitudinal slot (26), viewed in the cross-section of the housing (2), is inclined in a way to ensure that it intersects the envelope (33) at an angle other than 90°.

16. Housing according to claim 15, **characterised in that** the slot plane (32) intersects the envelope in a corner area (35a), preferably at a small distance from the associated corner (35).

17. Housing according to claim 15 or 16, **characterised in that** the housing (2) is provided with a longitudinal recess (43) in one of the comer areas (35) of the envelope (33), in which the outer end of the longitudinal slot (26) terminates.

## Revendications

1. Actionneur linéaire sans tige de piston, avec un boîtier allongé (2), qui présente une chambre de réception (3) pour un élément d'entraînement (6) mobile axialement, qui est couplé en mouvement par l'intermédiaire d'un coulisseau (12) traversant une fente longitudinale (26) du boîtier (2) avec un chariot de guidage (8) qui est guidé de manière mobile à l'extérieur du le boîtier (2) dans sa direction longitudinale sur un guidage linéaire qui présente deux sections de guidage (23) tournées dans une direction transversale (22) latéralement en direction des côtés longitudinaux opposés du boîtier, **caractérisé en ce que** la fente longitudinale (26) est disposée de telle manière que son plan de fente (32) s'étend obliquement par rapport au plan de guidage (24) du guidage linéaire (13) défini par la direction transversale (22) et la direction longitudinale (14), son ouverture extérieure de fente (28) étant tournée vers le plan de guidage (24).

2. Actionneur linéaire selon la revendication 1, **caractérisé en ce que** le plan de fente (32) ferme un angle aigu avec le plan de guidage (24).

3. Actionneur linéaire selon la revendication 1 ou 2, **caractérisé en ce que** le guidage linéaire (13) et la chambre de réception (3) se chevauchent au moins en partie dans la direction transversale (22) du plan de guidage (24), le coulisseau (12) dépassant le guidage linéaire (13) au moins d'une certaine distance à l'oblique en direction du chariot de guidage (8).

4. Actionneur linéaire selon l'une des revendications 1 à 3, **caractérisé par** une surface extérieure (31) définissant le contour extérieur du boîtier (2) avec quatre sections de surface extérieure (37a - 37d) opposées par paires, dont l'une est munie du guidage linéaire (13), tandis que les autres sont conformées en surfaces de fixation (38), la fente longitudinale (26) débouchant à l'extérieur en direction de la section de surface extérieure (37a) munie du guidage linéaire (13) ou en direction d'une zone de transition (35a) entre celle-ci et l'une des surfaces de fixation (38) lui faisant suite.

5. Actionneur linéaire selon la revendication 4, **caractérisé en ce que** la ligne d'enveloppe (33) du contour de la section du boîtier (2) est formée, au moins dans le tronçon de longueur du boîtier (2) contenant la fente longitudinale (26), par quatre lignes limites (34) décrivant sensiblement un rectangle, auxquelles est associée à chaque fois l'une des sections de surface extérieure (37a - 37d).

6. Actionneur linéaire selon la revendication 5, **caractérisé en ce que** le coulisseau (12) s'étend à l'intérieur de la ligne d'enveloppe (33) en direction de la section de surface extérieure (37a) du boîtier (2) présentant le guidage linéaire (13).

7. Actionneur linéaire selon l'une des revendications 1 à 6, **caractérisé en ce que** la fente longitudinale (26) débouche à l'extérieur en direction d'une zone de transition (35a) entre une section de surface extérieure (37a) présentant le guidage linéaire (13) et une autre section de surface extérieure (37b) lui faisant suite selon un angle, un évidement (43) s'étendant dans la direction longitudinale du boîtier (2) étant de préférence prévu dans la zone de transition (35a), évidement dans lequel le coulisseau (12) est coudé en direction de la section de surface extérieure (37) présentant le guidage linéaire (13).

8. Actionneur linéaire selon l'une des revendications 1 à 7, **caractérisé en ce que** le guidage linéaire (13) est formé d'un rail de guidage (17).

9. Actionneur linéaire selon la revendication 8, **caractérisé en ce que** le rail de guidage (17) est fixé sans vis sur le boîtier (2), par exemple par laminage ou par sa réalisation sous la forme d'un élément de boîtier d'un seul tenant.

10. Actionneur linéaire selon l'une des revendications 1 à 9, **caractérisé en ce que** le chariot de guidage (8) saisit par le dessus le guidage linéaire (13) à la manière d'un cavalier du côté opposé au boîtier (2).

11. Actionneur linéaire selon l'une des revendications 1 à 10, **caractérisé par** une forme constructive actionnable par la force d'un fluide, dans laquelle l'élément d'entraînement (6) est un piston exposé à un fluide et dans laquelle un dispositif d'étanchéité (44) est associé à la fente longitudinale (26).

12. Actionneur linéaire selon l'une des revendications 1 à 11, **caractérisé en ce que** le plan de guidage (24) s'étend parallèlement ou perpendiculairement au plan d'extension (15a, 20a) d'une surface porteuse (15,,20) du chariot de guidage (8) servant à la fixation d'au moins une charge à déplacer.

13. Actionneur linéaire selon l'une des revendications 1 à 12, **caractérisé en ce que** le plan de fente (32) traverse la section de surface extérieure (37a) qui présente également le guidage linéaire (13).

14. Actionneur linéaire selon l'une des revendications 1 à 13, **caractérisé en ce que** le plan de fente (32) traverse la surface extérieure (31) du boîtier (2) dans la zone de transition (35a) entre la section de surface extérieure (37a) présentant le guidage linéaire (13) et une autre section de surface extérieure (37b) lui faisant suite selon un angle.

15. Boîtier d'un actionneur linéaire, en particulier d'un actionneur linéaire selon l'une des revendications 1 à 14, avec une chambre de réception (3) s'étendant dans la direction longitudinale pour un élément d'entraînement (6) mobile axialement, et avec une fente longitudinale (26) permettant le passage d'un coulisseau (12) couplé en déplacement avec l'élément d'entraînement (26), la ligne d'enveloppe (33) du contour de la section du boîtier (2) étant définie au moins dans la section de longueur du boîtier (2) contenant la fente longitudinale (26), par quatre lignes limites (34) décrivant au moins sensiblement un rectangle, **caractérisé en ce que** le plan de fente (32) de la fente longitudinale (36), en regardant la section du boîtier (2), s'étend à l'oblique de telle manière qu'il coupe la ligne d'enveloppe (33) suivant un angle différent de 90°.

16. Boîtier selon la revendication 15, **caractérisé en ce que** le plan de fente (32) coupe la ligne d'enveloppe dans une zone d'angle (35), de préférence à une faible distance de l'angle (36) associé.

17. Boîtier selon la revendication 15 ou 16, **caractérisé en ce que** le boîtier (2) présente dans l'une des zones d'angle (35) de la ligne d'enveloppe (33) un évidement (43) d'extension longitudinale, dans lequel la fente longitudinale (26) débouche à l'extérieur.
